# EUROPÄISCHE PATENTSCHRIFT

(11) **EP 1 638 816 B1**
(45) Veröffentlichungstag und Bekanntmachung des Hinweises auf die Patenterteilung: **29.09.2010**
(21) Anmeldenummer: 03780085.1
(22) Anmeldetag: 28.11.2003
(51) Int. Cl.: B60R 19/20, A41D 13/018

(54) **PRE-CRASH-VERZ GERUNGSSYSTEM FÜR BEWEGTE OBJEKTE**
PRE-CRASH DECELERATION SYSTEM FOR MOVING OBJECTS
SYSTEME DE DECELERATION DE PRE-IMPACT DESTINE A DES OBJETS EN DEPLACEMENT

(30) Priorität: 27.06.2003 DE 10329180
(43) Veröffentlichungstag der Anmeldung: 29.03.2006
(73) Patentinhaber: Riek, Siegfried, Dr. med., D-78628 Rottweil (DE); Bachmann, Karl-Heinz, 78667 Villingendorf (DE); Gaiselmann, Thomas, D-78667 Villingendorf (DE)
(72) Erfinder: Riek, Siegfried, Dr. med., D-78628 Rottweil (DE); Bachmann, Karl-Heinz, 78667 Villingendorf (DE); Gaiselmann, Thomas, D-78667 Villingendorf (DE)
(74) Vertreter: Mussgnug, Bernd
(86) Internationale Anmeldenummer: PCT/EP2003/013442
(87) Internationale Veröffentlichungsnummer: WO 2005/000635

(56) Entgegenhaltungen:
- DE-A- 2 020 360
- DE-A- 2 330 745
- DE-A- 19 843 239
- US-A- 5 785 368
- US-B1- 6 203 079

## Beschreibung

Die Erfindung betrifft ein Pre-Crash-Verzögerungssystem für bewegte Objekte gemäß dem Oberbegriff des Anspruchs 1. Ein solches Verzögerungssystem ist aus der DE 23 30 745 A bekannt.

In Deutschland ereigneten sich im Jahr 2001 4894 tödliche Verkehrsunfälle. Dabei kamen 4000 Fahrzeuginsassen und 894 Fußgänger ums Leben. Bei Unfällen dieser Art findet eine Kollision des Autos mit einer bestimmten Geschwindigkeit mit einem anderen Verkehrsteilnehmer oder einem anderen Objekt statt. Liegt die Geschwindigkeit beim Aufprall über 0 km/h wird diese vorhandene kinetische Energie durch Deformation der kollidierenden Fahrzeuge in mechanische Energie umgewandelt und dabei abgebaut. Der Betrag der negativen Beschleunigung berechnet sich aus der Geschwindigkeit und der Wegstrecke, welche bis zum Stillstand zur Verfügung steht.

Prinzipiell entstehen Probleme durch die negative Beschleunigung, welche beim Crash sehr hohe Spitzenwerte annehmen kann. Während der Deformationsphase des Fahrzeuges ist der Insasse in der Fahrgastzelle diesen negativen Beschleunigungswerten ausgesetzt. Ohne Rückhaltesysteme findet an den Begrenzungen der Fahrgastzelle die Kraftübertragung unqualifiziert statt, wodurch Verletzungen entstehen würden. Am Ende der Deformationsphase kann der Insasse, falls die Fahrgastzelle deformiert wird mechanisch eingeklemmt und dabei verletzt werden. Die Fahrzeugindustrie ist daher bemüht durch konstruktive und materialtechnische Verbesserungen die Fahrgastzelle zu stabilisieren und diese möglichst nicht in die Deformationszone mit einzubeziehen. Weiterhin sollen die Insassen durch Rückhaltesysteme wie zum Beispiel Sicherheitsgurte daran gehindert werden, dass sie aus dem Fahrzeug katapultiert werden, sind aber von daher gezwungen, die gleiche negative Beschleunigung wie die Karosserie mitzumachen. Da nicht der ganze Körper gleichmäßig zurückgehalten, das heißt an die Karosserie gekoppelt werden kann, ist insbesondere der Kopf aus anatomischen Gründen stark gefährdet, mit einer bestimmten Geschwindigkeit gegen Teile des schon abgebremsten Innenraumes zu prallen. Dabei entstehen dann Spitzenwerte für die negative Beschleunigung, welche zu schweren KopfverIetzungen fE en können. Andere Systeme versuchen, durch geeignete konstruktive Maßnamen, wie zum Beispiel die Distanzierung der Lenksäule, beim Crash den Abstand zwischen Lenkrad und Brustkorb bzw. Kopf zu vergrößern und damit Verletzungen durch Verkleinerung der Fahrgastzelle zu minimieren (Audi). Weiterhin sind Airbagsysteme entwickelt worden, die eine qualifizierte Aufprallfläche schaffen und durch eine maximale-Erhöhung der Aufprallfläche die Kräfte beim Aufprall von Körperteilen auf die Fahrgastzelle reduzieren. Dieses Konzept wäre bei einem den gesamten Körper umschließenden Airbag komplett realisiert. Da dies technisch unmöglich ist, steigt die Zahl und Positionierung von vielen kleine Einzel-Airbags bei jeder neuen Modellbaureihe an, um diesem Ziel etwas näher zu kommen (Airbags in Gurtsystemen, Seiten-Airbags, Knie-Airbags).

Bei allen Crash-Tests haben sich jedoch Grenzwerte für die Beträge der negativen Beschleunigung ergeben, ab denen trotz aller Sicherheitssysteme leichte, mittlere oder schwere Verletzungen der Insassen eintreten.

Die Möglichkeiten der Verzögerung vor dem Crash sind mit den derzeitigen Technologien der Bremssysteme, Reifen und Fahrbahnbeläge physikalisch weitgehend ausgereizt, so dass von dieser Seite keine wesentliche Reduktion der absoluten Verzögerungswerte von etwa 11m/s², welche auf das Fahrzeug beim Crash einwirken, zu erwarten sind. Bei einem Crash der Karosserie wird zunächst auf einem Großteil der zur Verfugung stehenden Deformationszone nur ein Teil der Geschwindigkeit abgebaut, wobei in der Crash-Endphase bei zunehmend deformierter und damit steifer werdender Karosserie die noch vorhandene Restgeschwindigkeit auf einer sehr kurzen Strecke abgebaut werden muss, wo Spitzenwerte für die negative Beschleunigung entstehen und das Verletzungsrisiko für die Insassen maximal ist.

Besonders ungünstig stellt sich die Situation im Beispiel des Seitenaufpralls bei einem Auto dar, da die Türen konstruktionsbedingt nur wenig Deformationszone bis zur Verkleinerung der Fahrgastzelle und eine geringere Stabilität als die Front- oder die Heckpartie des Fahrzeuges bieten. Daher sind beim Seitenaufprall (zum Beispiel typischer Baumunfall) die Verletzungsrisiken am größten, da zum einen die Fahrgastzelle deformiert und somit verkleinert wird und zum anderen der Insasse auf kürzestem Weg an der Türe oder ggf. dem Seitenairbag abgebremst wird, wobei sehr hohe negative Beschleunigungswerte entstehen.

Dieses Problem ist sehr krass zum Beispiel bei einem Motorradfahrer gegeben, welcher bedingt durch die konstruktive Auslegung des Fortbewegungsmittels beim crash lediglich durch seine Spezialbekleidung und einen Helm geschützt wird. Da beim crash der Motorradfahrer meistens den Kontakt zu seinem Fahrmittel verliert und zum Beispiel bei Abrutschen in einer Kurve hinter diesem auf Fahrbahn schleudert oder zum Beispiel bei einem Frontalcrash infolge der hohen negativen Beschleunigung des Fahrmittels über dieses hinweggeschleudert wird, findet eine Kollision des Körpers mit der Fahrbahn oder Leitplanken oder mit einem anderen Auto statt, wobei die Spezialbekleidung und der Helm nur wenige Zentimeter zusätzlichen Bremsweg mit nur geringer negativer Beschleunigung vor dem Körpercrash zur Verfügung stellen können. Daher rührt die hohe Zahl von Schwerstverletzten bei Motorradunfällen.

Als weiteres Beispiel seien Wasserfahrzeuge und Schiffe angeführt.. Diese könne bauartbedingt nicht direkt, sondern nur über Umkehrschub ihrer Antriebsmittel abgebremst werden. Daraus resultieren sehr lange Bremswege (Beispiel Öltanker), welche oft mit an einer Kollision verantwortlich sind. Kollisionen dieser Art führen oft zu Umweltkatastrophen zum Beispiel durch auslaufendes Öl.
Die technische Ausstattung der bewegten Objekte wird stetig weiterentwickelt. So existieren interaktive Sensorsysteme, welche mit geeigneten Techniken wie zum Beispiel Kameras oder Radar die Relativbewegungen der unmittelbar in der Nähe des Fahrzeuges befindlichen Verkehrsteilnehmer erfassen können. Daraus ergeben sich interessante Entwicklungen wie zum Beispiel Sicherheitsabstandswarnsysteme. Intelligente Programmschaltungen können eine Notbremsung mit definierter Kennlinie einleiten und den Fahrer durch eine standardisierte ABS-Bremsung (Bremsassistent, Fa. Daimler-Chrysler) unterstützen. Gierwinkelsensorgesteuerte Schaltungen (PSM, Fa. Porsche) erkennen drohendes Unter- oder Übersteuern und greifen interaktiv durch eine selektive Bremsung der entsprechenden Räder und Eingriff ins Motormanagement, über die Reduktion der Motorkraft oder über aktive Eingriffe in die Lenkung (BMW, Fahrdynamik Control) stabilisierend in kritischen Fahrzuständen ein. Pre-crash Systeme (Daimler-Chrysler) erkennen durch geeignete Sensorsysteme einen bevorstehenden Crash und aktivieren rechtzeitig Gurtstraffer, bringen Sitze in geeignete Positionen und Schließen geöffnete Fenster.

Bekannt sind Airbagsysteme ,welche an der Karosserie angebracht werden können, um bei einem Crash Fussgänger vor dem Aufprall auf die Stoßstange zu schützen (z.B. DE 100 62 560 A1, EP 1 024 063 A2). Weiterhin sind Airbagsysteme bekannt, die vor einem Crash entfaltet werden, wenn ein Sensor ein Hindernis feststellt (DE 198 06 153 A1). Dieses System erzeugt durch den Airbag eine zusätzliche Knautschzone, um Fahrzeug- und Personenschäden zu reduzieren. Der Airbag wird explosionsartig gefüllt und wirkt nicht als Bremssysteme sondern als Schock-Absorber, der die erhöhten neg. Beschleunigungswerte nicht wesentlich verringert.

Aus der DE 23 30 745 A ist ein Pre-Crash-Verzögerungssystem bekannt, bei welchem an einem Kraftfahrzeug, z. B. anstelle der Stoßstange ein Airbag angeordnet ist, der bei einem drohenden Crash aufgeblasen und ausgefahren wird, um die Distanz zwischen dem Kraftfahrzeug und einem Crash-Gegner zu füllen. Ultraschall-Sensoren bestimmen den Abstand und die Annäherungsgeschwindigkeit zwischen dem Kraftfahrzeug und einem potentiellen Crash-Gegner. Aus diesen Größen und der Geschwindigkeit und dem zugeordneten Bremsweg des Kraftfahrzeugs wird ein drohender Crash festgestellt und ein Signal zum Aufblasen des Airbags ausgelöst. Der Airbag ist mit Überdruckventilen ausgestattet, deren Einstellung so programmiert ist, dass der Airbag beim Aufprall mit einer erwünschten weichen Kennung und hoher Energieabsorption verformt wird. Durch die Überdruckventile wird der maximale Innendruck des Airbags auf einen programmierten Wert begrenzt, so dass der Verformungswiderstand und damit die Verzögerung nicht zu stark ansteigen. Eine optimale Ausnützung der Verformung des Airbags ist damit noch nicht erreicht.

Der Erfindung liegt die Aufgabe zu Grunde, ein Pre-Crash-Verzögerungssystem zu schaffen, welches die Verletzungsgefahr verringert oder zumindest den Schweregrad der Verletzungen reduziert, indem der Energieabbau durch ein an der Außenseite des Objektes angeordnetes verformbares Formelement optimiert wird.

Diese Aufgabe wird erfindungsgemäß gelöst durch ein Verzögerungssystem mit den Merkmalen des Anspruchs 1.

Vorteilhafte Ausführungen und Ausbildungen der Erfindung sind in den Unteransprüchen angegeben.

Erfindungsgemäß wird der Bereich zwischen den negativen Beschleunigungskräften z. B. bei einer konventionellen Bremsung mit 1,1 G und beim Crash mit Spitzenwerten von zum Beispiel 200 G genützt, um die Kräfte der negativen Beschleunigung vor dem Crash bis in den noch biokompatiblen Bereich zu erhöhen, so dass noch keine Verletzungen der Insassen, insbesondere in Kombination mit den Airbagsystemen und Rückhaltesystemen im Inneren der Fahrgastzelle auftreten, aber möglichst viel Energie abgebaut wird bevor es zur Kollision der Karosserien der Crash-Gegner kommt. Ein aktiviertes Formelement kann eine kontinuierliche negative Beschleunigung auf definiertem Niveau bis zum Berühren der Crash-Gegner gewährleisten. Somit werden erfindungsgemäß die negativen Beschleunigungskräfte schon vor der Kollision der Karosserien definiert erhöht.

Das erfindungsgemäße Formelement wird ausgelöst, sobald ein bevorstehender oder drohender Crash erkannt wird. Hierzu können an sich bekannte Sensor-Techniken eingesetzt werden, z. B. optische Systeme oder Radarsysteme, die die Relativbewegung des bewegten Objekts gegenüber anderen kollisionsgefährlichen Objekten erfassen. Solche Techniken werden bereits in Fahrzeug-Sicherheitssystemen eingesetzt.

Das variable Formelement wird bei einem drohenden Crash entfaltet, um die Distanz zwischen den Crashgegnern auszufüllen. Das Formelement verzögert das Objekt mit einem definierten erhöhten Verzögerungswert, um die Distanz zwischen den Crash-Gegnern optimal auszunützen und die Verzögerung über die gesamte Distanz möglich gleichmäßig zu verteilen. Hierzu sind Stellelemente vorgesehen, die eine definierte Verformung des Formelementes unter der Wirkung der kinetischen Energie des bewegten Objektes ermöglichen und dadurch eine gesteuerte bzw. geregelte Verzögerung des Objektes über den gesamten Weg erlauben von der Auslösung des Systems bis zu dem Crash, d.h. der unmittelbaren Berührung der Crash-Gegner. Die bei den gesamten Vorgang auftretenden maximalen Verzögerungswerten werden auf diese Weise reduziert, da ein größerer Weg zum Abbau der kinetischen Energie vor dem Crash zur Verfügung steht.

Es sind verschiedene Ausführungen der Erfindung möglich.

In eine Ausführung wird das Pre-Crash-Verzögerungssystem für Kraftfahrzeuge eingesetzt. Bei einem durch ein geeignetes Sensorsystem festgestellten drohenden Crash wird das Formelement durch eine geeignete interaktive Vernetzung mit Prozessorelemente, Schaltelementen und Sensorelementen, die das Fahrgeschehen überwachen und den bevorstehenden Crash feststellen, von dem Fahrzeug ausgehend gegen das potenzielle Hindernis hin entfaltet.

In einer weiteren Ausführung kann das System von einem Motorradfahrer ähnlich wie ein Rucksack oder eine Spezialweste getragen werden, wobei die Pre-Crash-Sensorik und Elektonik mit den entsprechenden Mikroprozessoren sowie die entfaltbaren Formelemente in dieses Bremssystem integriert sein können oder es können über einen Datenautausch die Pre-Crash-Sensorik und die dazugehörigen Mikroprozessoren örtlich vom tragbaren Bremssystem getrennt installiert sein. Bei einem vorhersagbaren Crash kann dann zum Beispiel das Formelement wie ein großer Form-Bag entfaltet werden und zugleich stabilisierende Funktion (Wirbelsäule/Kopf) ausüben. So kann der Körper des Fahrers in einer vorteilhaften Haltung fixiert werden. Der zumindest teilweise eingeschlossene Fahrer kann so bei einem Crash zum Beispiel 2 Meter zusätzlichen Bremsweg erhalten, wobei auch hier Stellmittel zur Reduktion der maximalen negativen Beschleunigung vorhanden sein können. Die maximalen negativen Beschleunigungswerte sind dabei gegenüber der Situation ohne dieses System drastisch reduziert und somit Verletzungen minimiert.

Bei Booten ist durch die erfindungsgemäßen Formelemente in Verbindung mit einer Pre-Crash- Sensorik auf Grund der relativ geringen Fortbewegungsgeschwindigkeit und des für die Entfaltung zur Verfügung stehenden Platzes eine optimale Bremsung oder Ablenkung der Crash-Gegner möglich.

Die Wirkung des erfindungsgemäßen Pre-Crash-Bremssystems ergibt sich aus folgenden Beispielen, wobei bedeutet:
a= Beschleunigung
s=Bremsweg (durch Karosserieverformung)
sf= Bremsweg (durch aktiviertes Formelement)
v=Geschwindigkeit
a=v²/2s

### Beispiel 1: Aufprall mit 108km/h auf eine Betonmauer

v= 30m/s (108km/h), s=1m (Deformationszone der Karrosserie 1m)
a= 900m²/2m s²= 450m/s²= 45,9G
die gleiche Situation mit aktiviertem Formelement:
v= 30m/s (108 km/h), sf= 5m
a = 900m²/10m s² = 90m/s²= 9,2G

### Beispiel 2: Aufprall mit 216 km/h auf eine Betonmauer

v=60m/s (216 km/h) s=1m
a=3600m²/2m s²= 1800m/s² =183,5G
die gleiche Situation mit aktiviertem Formelement:
v=60m/s (216km/h), sf = 5m
a=3600m²/10m s² =360 m/s² = 36,7 G
Beispiel 3: Aufprall mit 50 km/h auf eine Betonmauer
v=13,89 m/s (50km/h), s= 1m
a=192,9m²/2m s² = 96,5m/s² = 9,8G
die gleiche Situation mit aktviertem Formelement:
v=13,89 m/s (50km/h), sf = 5m
a= 192,9m²/10m s² =19,29 m/s² = 2G

Im Beispiel 1 bei einem Aufprall eines Kraftfahrzeuges ohne das Bremssystem auf eine stehende Betonmauer frontal mit 108km/h wird das Auto auf Null km/h auf einem Weg von zum Beispiel 1m gebremst. Bedingt durch die Deformationszone der Karosserie ergibt sich ein Betrag für die negative Beschleunigung von ca. 45,9G, welche auf die Insassen einwirkt und bei kleinflächiger Applikation zu lebensgefährlichen Verletzungen führen kann. Bei einem erfindungsgemäßen Formelement, welches 5m vor dem Aufprall aktiviert wird und dann die 5m Distanz bis zum Crashgegner überbrückt und mit diesem in Kontakt tritt, stehen somit 5m zusätzlicher Bremsweg für eine Bremsung mit erhöhter negativer Beschleunigung zur Verfügung und es ergeben sich dadurch maximale Verzögerungskräfte von 9,2G welche auf die Insassen einwirken, wobei in Kombination mit Rückhalte- und Airbagsystemen Verletzung sogar weitestgehend ausgeschlossen werden können.

Im Folgendem wird die Erfindung anhand von in der Zeichnung dargestellten Ausführungsbeispielen näher erläutert. Es zeigen
- Abb. 1: einen PKW mit einem Pre-Crash-Bremssystem in entfaltetem Zustand in Seitenan- sicht,
- Abb. 2: eine Draufsicht auf das System der Abb. 1,
- Abb.3: einen PKW mit integriertem Bremssystem in nicht aktivierten Zustand,
- Abb.4: eine Abb.3 entsprechende Seitenansicht mit aktivierten Bremssystem,
- Abb. 5: einen vertikalen Querschnitt durch das Bremssystem der Abb.3,
- Abb.6: eine perspektivische Darstellung des Bremssystems im nicht aktivierten Zustand,
- Abb.7: in perspektivischer Ansicht das Bremssystem im aktivierten entfalteten Zustand,
- Abb.8: eine Seitenansicht eines PKW's mit einem Bremssystem in einer weiteren Ausfüh- rung im nicht aktivierten Zustand,
- Abb.9: eine Abb.8 entsprechende Darstellung mit aktiviertem Bremssystem,
- Abb.10: einen Motorradfahrer mit einem Bremssystem in einer weiteren Ausführung in nicht aktiviertem Zustand,
- Abb.11: eine Abb. 10 entsprechende Darstellung mit aktiviertem Bremssystem,
- Abs.12: eine Darstellung des Motorradfahrers in der Crash-Situation,
- Abb.13: in Seitenansicht eine Pre-Crash-Situation zwischen zwei Schiffen,
- Abs.14: eine Draufsicht auf die Schiffe zu Beginn der Wirksamkeit des Bremssystems und
- Abb.15: eine Abb. 14 entsprechende Darstellung bei fortgeschrittener Abbremsung.

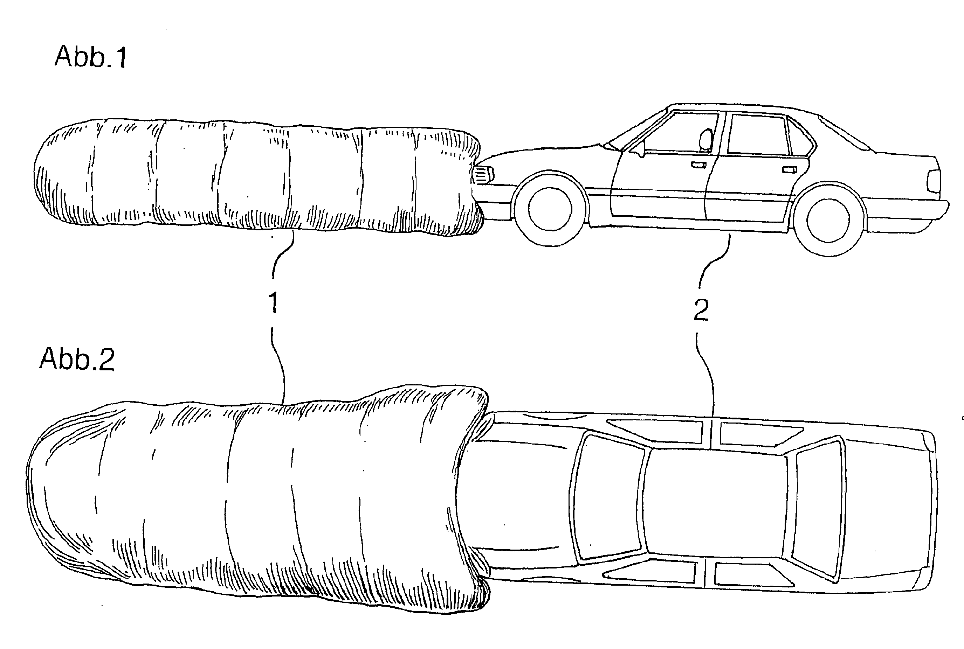

In den Abbildungen 1 und 2 ist das Grundprinzip der Erfindung dargestellt. Ein bewegtes Objekt, im Ausführungsbeispiel ein Personenkraftwagen 2 weist als Pre-Crash-Bremssystem ein variables Formelement 1 auf Dieses Formelement 1 ist im Normalzustand des PKW 2 zusammengefaltet und an der Karosserie des PKW 2 montiert oder vorzugsweise in die Karosserie integriert.

Ein in den PKW eingebautes Sensorsystem überwacht den Betrieb des PKW 2. Das nicht dargestellte und an sich bekannte Sensorsystem kann beispielsweise den Raum vom dem PKW überwachen, um eine frontale Kollision oder ein Auffahren auf ein Hindernis oder ein anderes Fahrzeug zu erfassen. Ebenso können Gierwinkel-Sensoren, Neigungs-Sensoren, Geschwindigkeit- und Abstandssensoren in geeigneten Positionen in dem Fahrzeug angeordnete sein, um dessen Fahrverhalten, ein evtl. Schleudern und dergleichen zu detektieren.

Gibt das Sensorsystem ein Signal, welches einen möglichen bevorstehenden Crash anzeigt, so wird das Bremssystem ausgelöst. Das variable Formelement 1 wird zwangsweise entfaltet, um den Zwischenraum zwischen dem PKW 2 und dem vermuteten Crash-Gegner oder -Objekt auszufüllen. Sobald sich der PKW dem Crash-Gegner soweit genähert hat, wie dies der Ausdehnung des Formelements 1 entspricht, kommt das Formelement 1 mit dem Crash-Gegner in Kontakt. Bei der weiteren Annäherung des Fahrzeugs und des Crash-Gegners wird das Formelement 1 entsprechend der abnehmenden Distanz zwischen den sich einander nähernden Crash-Gegnern verformt. Durch geeignete Stellmittel wird dabei diese Verformung des Formelements 1 so gesteuert, dass die Abbremsung des Fahrzeugs 2 mit definiertem Verzögerungswert erfolgt. Ein integriertes Prozessor-Systems steuerte bzw. regelt die Verformung des Formelements dabei in der Weise, dass die Verzögerung über den gesamten Verformungsweg, d. h. bis zu der Crash-Berührung der Crash-Gegner einen erhöhten jedoch biokompatiblen Wert einhält. Dies bedeutet, dass der Verzögerungswert möglichst hoch liegt, um eine möglichst effektive Abbremsung zu erzielen, jedoch immer unter einem definierten Maximalwert bleibt, der von den Insassen des Fahrzeuges noch ohne körperliche Schädigung ertragen werden kann und nicht zu Verletzungen dadurch führt, dass der Körper des Insassen unkontrolliert gegen die Fahrgastzellen oder sonstige Teile des Fahrzeuges aufprallt.

Das Formelement besteht vorzugsweise aus einer flexiblen Formhülle, die bei Auslösung schlagartig mit Druckluft oder dergleichen insuffliert und aufgeblasen wird. Die Stellelemente, die ein definiertes gesteuertes Deformieren bei der Abbremsung des Fahrzeuges bewirken, können z.B. Ventile sein, die öffnen und das Füllgas aus der Formhülle entweichen lassen, wenn der Druck im Inneren der Formhülle durch die Kompressionsverformung einen vorgegebenen Wert überschreitet Es können auch Regelventile verwendet werden, die entsprechend dem ansteigenden Druck in der Formhülle mehr oder weniger stark öffnen, um den Innendruck in der Formhülle bei der zunehmenden Verformung konstant halten. Dieser über die Ventile eingehaltene Maximaldruck im Innern der Formhülle definiert den Verzögerungswert, mit welchem das Formelement das Fahrzeug abbremst.

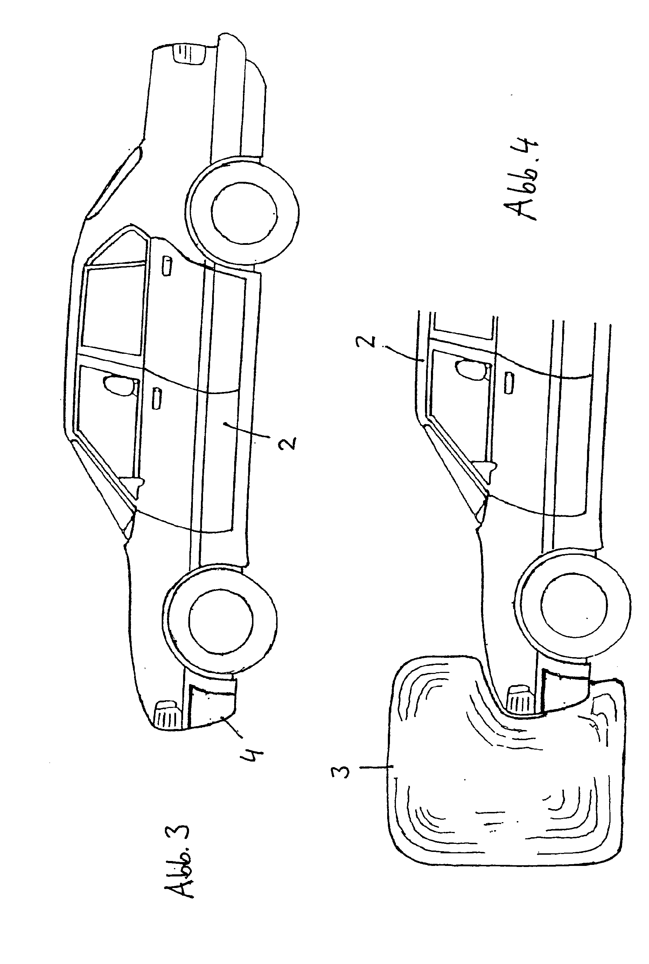

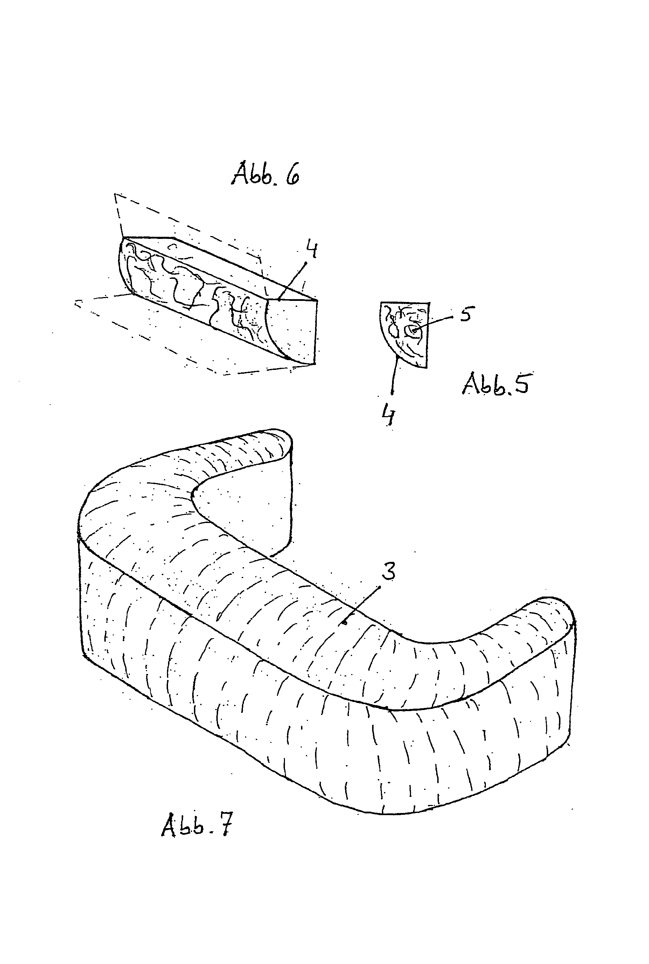

In den Abbildungen 3 bis 7 ist eine andere Ausführung dargestellt. Das variable Formelement ist in der Frontseite der Karosserie des PKW 2 z.B. unter der Stossstange integriert. Die flexible Formhülle 3 ist zusammen gefaltet und in ein Gehäuse 4 gekapselt, welches sich integriert in die Kontur der Karosserie des PKW 2 einfügt. Auf das Signal eines Sensors öffnet sich das Gehäuse 4 und die Formhülle 3 kann sich entfalten, um die Frontseite des PKW 2 zu umhüllen, wie dies in den Abbildungen 4 und 7 ersichtlich ist. Die entfaltete Formhülle 3 liefert somit den zusätzlichen Bremsweg für das gezielte Abbremsen mit erhöhten Verzögerungswert.

Alternativ zu dem Aufblähen der Formhülle 3 mittels Druckluft und dem gesteuerten Ablassen dieser Druckluft ist eine weitere Möglichkeit der Verformung vorgesehen. In der Formhülle 3 sind eine Vielzahl von Druckelementen 5 eingeschlossen. Die Druckelemente 5 sind beispielsweise als ball- oder kissenförmige geschlossene Elemente ausgebildet, die mit einem Gas gefüllt sind. Diese Druckelemente 5 werden zusammen mit der flexiblen Formhülle 3 auf ein kleines Volumen komprimiert und in das Gehäuse 4 eingeschlossen. Das Gehäuse 4 hält die Formhülle 3 mit den gasgefüllten Druckelementen komprimiert. Wird auf das Sensorsignal hin das Gehäuse 4 geöffnet, so expandieren die unter Druck stehenden Druckelemente 5 und entfalten die Formhülle 3. Während des Crashvorgangs wird die entfaltete Formhülle 3 durch die sich aufeinander zu bewegenden Crash-Gegnern zunehmend komprimiert. Dadurch werden auch die einzelnen Druckelemente 5 komprimiert. Überschreitet der auf ein Druckelement 5 ausgeübte Kompressionsdruck eine Grenzwert, so platzt das Druckelement 5. Dadurch gibt die Formhülle 3 in gewissem Maße nach, wobei der Druck durch die Kompression der verbleibenden Druckelemente 5 wieder ansteigt und das definierte Abbremsen bewirkt. Auf diese Weise platzen die Druckelemente 5 sukzessiv nacheinander und ein gezieltes definiertes Verformen der Formhülle 3 mit im Wesentlichen konstanter Verzögerung wird bewirkt.

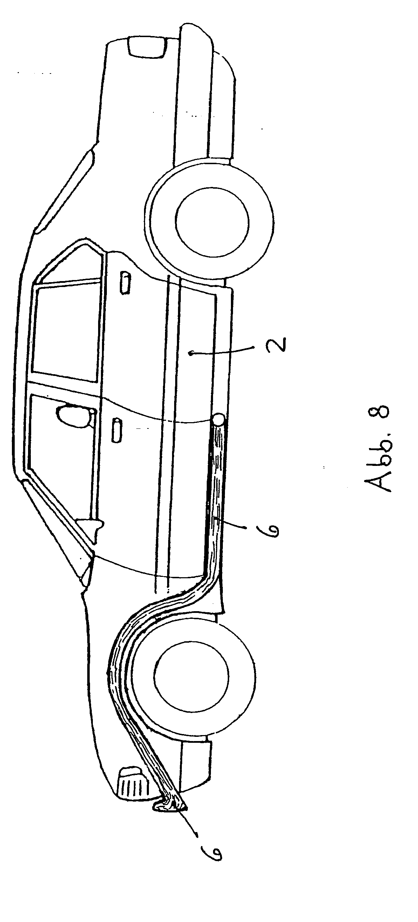

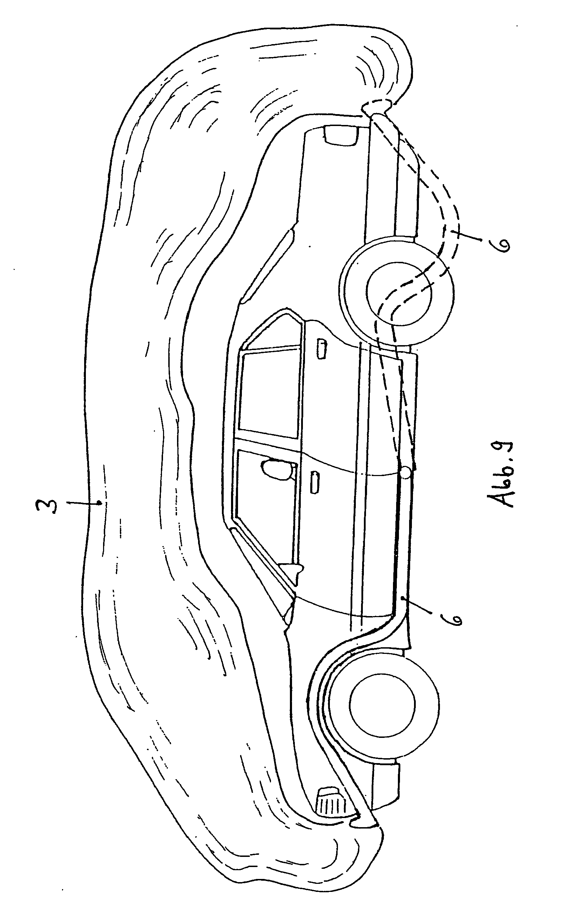

Die Abbildungen 8 und 9 zeigen eine weitere Ausführung.

In dieser Ausführung ist an der Karosserie des PKW 2 ein Bügel 6 gelagert. Der Bügel 6 umschließt im Wesentlichen U-förmig die Front des PKW 2, wobei die Enden der Schenkel des

Bügels 6 schwenkbar an den beiden Seiten des PKW 2 etwa in der Mitte der Länaserstreckung des PKW 2 gelagert sind. Der Bügel 6 nimmt das variable Formelement in Form einer flexiblen Formhülle 3 auf.

Stellt das Sensorsystem einen bevorstehenden Crash oder ein Schleudern des PKW 2 fest, so wird der Bügel 6 um die Querachse seiner Lagerung aus der in Abbildung 9 in ausgezogenen Linien gezeigten Ruhestellungen in die gestrichelt eingezeichnete Stellung verschwenkt. Bei dieser Schwenkbewegung zieht der Bügel 6 die Formhülle von der Frontseite des PKW 2 über dessen Dach bis zum Heck des PKW 2. In dem Bügel 6 ist ein Luftzuführ- und Abführ-Luftsystem angeordnet, durch welches die Formhülle in der vorstehend beschriebenen Weise aufgeblasen wird. Die aufgeblasene Formhülle umfasst das Fahrzeug im wesentlichen über dessen gesamten Außenumfang. Auch bei Überschlag oder Ähnlichem ist ein gezieltes Abbremsen und ein gesteuerter Abbau der kinetischen Energie möglich, bevor das Fahrzeug auf das Hindernis aufprallt.

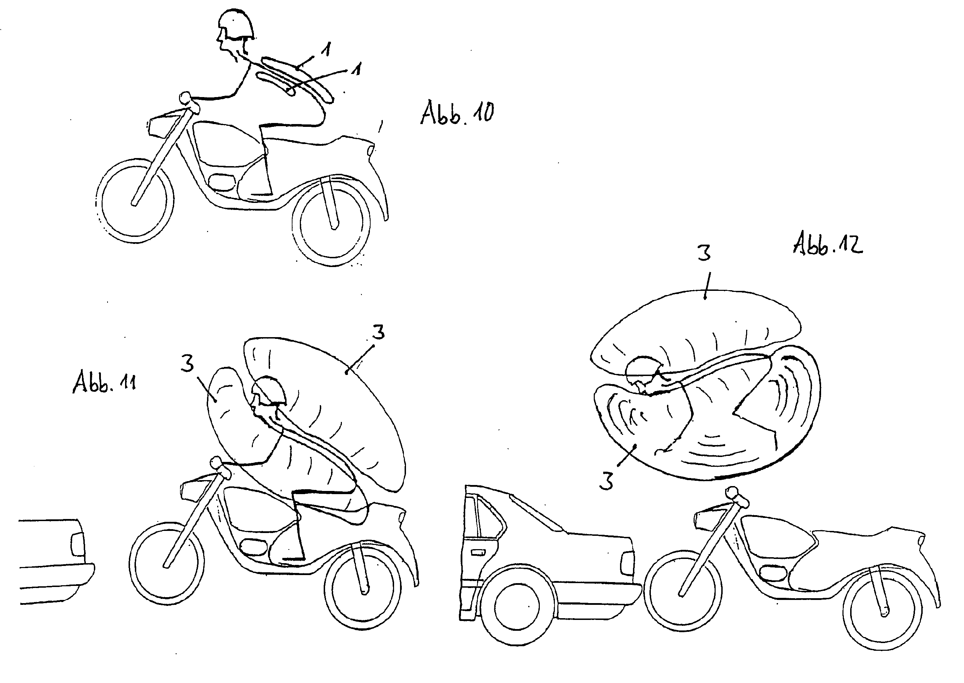

Die Abbildungen 10 bis 12 zeigen eine weitere Ausführung der Erfindungen.

Ein Motorradfahrer trägt das Bremssystem z.B. in Form einer Weste oder eines Rucksacks. Vorzugsweise ist dabei ein Formelement auf dem Rücken und ein Formelement an der Brust des Fahrers angeordnet. Auf das Signal eines Sensorsystems, welches in das Bremssystem integriert sein kann oder an dem Motorrad angebracht ist, wird das Bremssystem ausgelöst.

Wie Abbildung 11 zeigt entfaltet sich eine der Formhüllen 5 am Rücken des Fahrers und die andere Formhülle 5 an der Körpervorderseite des Fahrers. Der Fahrer wird durch diese beiden entfalteten Formhüllen an Kopf und Rumpf vollständig abgedeckt und geschützt.

Wie Abbildung 12 zeigt, kann das Bremssystem auch so ausgebildet sein, dass die Fonnhüllen 5 auch die Extremitäten des Fahrers abdecken und schützen.

Prallt das Motorrad gegen ein Hindernis, wie dies in Abb. 12 gezeigt ist, wird der Fahrer häufig von dem Motorrad abgehoben und fliegt durch die Luft. Durch den allseitig den ganzen Körper des Fahrers umschießenden Schutz durch die Formhüllen 5 wird der Aufprall des Fahrers gegen ein Hindernis oder auf den Boden abgefangen oder biokompatibel abgebremst, egal in welcher Körperhaltung der Fahrer aufprallt.

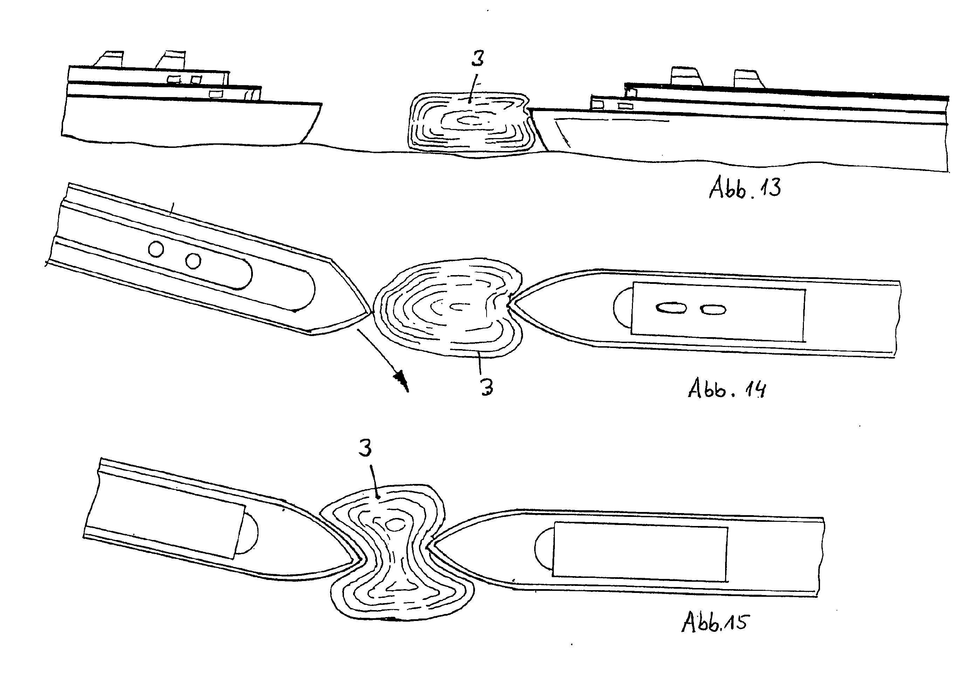

Die Abbildungen 13 bis 15 zeigen die Anwendung des erfindungsgemäßen Bremssystems bei Schiffen. Bei Schiffen ist eine relativ geringe Fahrgeschwindigkeit mit einer relativ großen Masse verbunden. Es muss daher eine durch die große Masse bedingte hohe kinetische Energie abgebremst werden, wobei jedoch die langsame Fahrgeschwindigkeit genügend Zeit lässt, ein großvolumiges Formelement zu entfalten. Das Formelement 5 kann daher ein gezieltes Abbremsen über einen relativ großen Verzögerungsweg ermöglichen.

Wie aus den Abbildungen 14 und 15 ersichtlich ist, ist bei der Gefahr einer Kollision von zwei Schiffen häufig nicht ein vollständiges Abbremsen der gesamten kinetischen Energie notwendig, sondern es genügt, eine gewissen Bahnumlenkung, um eine Kollision und größeren Schäden zu verhindern.

## Patentansprüche

1. Pre-Crash-Verzögerungssystem für bewegte Objekte, bei welchem mindestens ein variables Formelement (1) an der Außenseite des Objektes (2) angeordnet ist, bei welchem ein Sensorsystem einen potentiellen Crash des Objektes mit einem Crash-Gegner erfasst, bei welchem das Sensorsystem vor einem drohenden Crash das Formelement auslöst und entfaltet, bei welchem das entfaltete Formelement (1) mit dem Crash-Gegner in Kontakt kommt und die Distanz zwischen dem Objekt und dem Crash-Gegner füllt, bei welchem das Formelement (1) zwischen dem Objekt und dem Crash-Gegner verformt wird, wodurch eine erhöhte Verzögerung des Objektes bewirkt wird und bei welchem Stellmittel die Verformung des Formelementes (1) steuern,
**dadurch gekennzeichnet, dass** die Stellmittel die Verformung des Formelementes (1) definiert steuern, um einen definierten Verzögerungswert einzustellen.

2. Verzögerungssystem nach Anspruch 1,
**dadurch gekennzeichnet, dass** ein in dem Objekt (2) integriertes Steuerungssystem auf Grund der von dem Sensorsystem erfassten Parameter benachbarter Verkehrsteilnehmer oder Hindernisse (z.B. Geschwindigkeit oder Abstand eines Crash-Gegners) und auf Grund von Parametern der Fahrkinetik des Objektes (z. B. eigene Geschwindigkeit, maximale mögliche Verzögerung, Gierwinkel) die Aktivierung des Formelementes (1) und dessen definierte Verformung steuert.

3. Verzögerungssystem nach Anspruch 1 oder 3,
**dadurch gekennzeichnet, dass** das Formelement (1) eine flexible Formhülle (3) aufweist, die bei Aktivierung durch Druck entfaltet wird.

4. Verzögerungssystem nach Anspruch 3,
**dadurch gekennzeichnet, dass** die flexible Formhülle (3) in ihrem nicht aktivierten Zustand in das Objekt (2), insbesondere in die Karosserie eines Fahrzeuges integriert ist

5. Verzögerungssystem nach Anspruch 3 oder 4,
**dadurch gekennzeichnet, dass** die flexible Formhülle (3) durch ein unter Druck eingeleitetes Gas entfaltet wird und dass die Verformung der Formhülle (3) durch definiertes Ablassen des Gases gesteuert wird.

6. Verzögerungssystem nach Anspruch 3 oder 4,
**dadurch gekennzeichnet, dass** in der Formhülle (3) eine Vielzahl von flexiblen gasgefüllten Druckelementen (5) eingeschlossen sind, dass die Formhülle (3) mit den eingeschlossenen Druckelementen (5) im inaktivierten Zustand des Systems in einem Behälter (4) komprimiert eingeschlossen sind, dass zur Aktivierung der Behälter (4) geöffnet wird, wodurch sich die Druckelemente (5) ausdehnen und die Formhülle (3) entfalten, und dass die Druckelemente (5) bei der Verformung komprimiert werden und bei Überschreiten eines vorgegebenen Kompressionsdruckes aufeinanderfolgend platzen.

7. Verzögerungssystem nach einem der vorhergehenden Ansprüche, zur Verwendung bei einem Kraftfahrzeug,
**dadurch gekennzeichnet, dass** ein oder mehrere Formelemente (1) an der Außenseite des Fahrzeuges angeordnet sind.

8. Verzögerungssystem nach Anspruch 7,
**dadurch gekennzeichnet, dass** ein schwenkbar an der Karosserie des Fahrzeuges (2) angeordneter Bügel (6) einen oder mehrere flexible Formhüllen (3) aufweist und dass der Bügel (6) bei Aktivierung des Systems über das Fahrzeug (2) geschwenkt wird und die flexiblen Formhüllen (3) über das gesamte Fahrzeug entfaltet.

9. Verzögerungssystem nach einem der Ansprüche 1 bis 6,
**dadurch gekennzeichnet, dass** wenigstens ein Formelement am Körper einer Person, insbesondere eines Motorradfahrers anbringbar ist.

## Claims

1. A pre-crash deceleration system for moving objects, in which at least one variable shaped element (1) is arranged on the outside of the object (2), in which a sensor system detects a potential crash of the object with an anti-crash means, in which the sensor system activates and deploys the shaped element prior to an imminent crash, in which the deployed shaped element (1) comes into contact with the anti-crash means and fills the space between the object and the anti-crash means, in which the shaped element (1) is deformed between the object and the anti-crash means, as a result of which an increased deceleration of the object is caused and in which actuating means control the deformation of the shaped element (1), **characterized in that** the actuating means control the deformation of the shaped element (1) in a defined manner in order to set a defined deceleration value.

2. A deceleration system according to claim 1, **characterized in that** a control system integrated in the object (2) controls the activation of the shaped element (1) and the defined deformation thereof on the basis of the parameters of adjacent road users or obstacles (for example the speed or distance of an anti-crash means) detected by the sensor system and on the basis of parameters of the travel kinetics of the object (for example its own speed, maximum possible deceleration, yaw angle).

3. A deceleration system according to claim 1 or 3, **characterized in that** the shaped element (1) has a flexible shaped sleeve (3) which is deployed during activation by pressure.

4. A deceleration system according to claim 3, **characterized in that** the flexible shaped sleeve (3) is integrated in the object (2), in particular in the body of a vehicle, in its non-activated state.

5. A deceleration system according to claim 3 or 4, **characterized in that** the flexible shaped sleeve (3) is deployed by a gas introduced under pressure, and the deformation of the shaped sleeve (3) is controlled by a defined release of the gas.

6. A deceleration system according to claim 3 or 4, **characterized in that** a plurality of flexible pressure elements (5) filled with gas are enclosed in the shaped sleeve (3), the shaped sleeve (3) and the enclosed pressure elements (5) are enclosed compressed in a container (4) in the inactive state of the system, the container (4) is opened for activation, as a result of which the pressure elements (5) extend and deploy the shaped sleeve (3), and the pressure elements (5) are compressed during the deformation and break in succession when a preset compression pressure is exceeded.

7. A deceleration system according to any one of the preceding claims, for use in a motor vehicle, **characterized in that** one or more shaped elements (1) are arranged on the outside of the vehicle.

8. A deceleration system according to claim 7, **characterized in that** a yoke (6) arranged so as to be pivotable on the body of the vehicle (2) has one or more shaped sleeves (3), and the yoke (6) is pivoted over the vehicle (2) when the system is activated, and deploys the flexible shaped sleeves (3) over the entire vehicle.

9. A deceleration system according to any one of claims 1 to 6, **characterized in that** at least one shaped element is capable of being attached to the body of a person, in particular a motorcycle rider.

## Revendications

1. Système de décélération de pré-collision pour des objets mobiles, dans lequel
au moins un élément de forme variable (1) équipe le côté extérieur de l'objet (2),
un système de capteurs saisit une collision potentielle de l'objet avec un obstacle de collision,
le système de capteurs déclenche et déploie l'élément de forme avant une collision imminente,
l'élément de forme (1), déployé, arrive en contact avec l'obstacle de collision et remplit l'intervalle entre l'objet et l'obstacle,
l'élément de forme (1) se déforme entre l'objet et l'obstacle et produit une plus forte décélération de l'objet, et
des moyens de réglage commandent la déformation de l'élément de forme (1),
**caractérisé en ce que**
les moyens de réglage commandent de manière définie la déformation de l'élément de forme (1) pour régler une valeur de décélération définie.

2. Système de décélération selon la revendication 1,
**caractérisé en ce que**
un système de commande intégré à l'objet (2) active l'élément de forme (1) et commande sa déformation définie en fonction des paramètres saisis par le système de capteurs et concernant des participants à la circulation voisins ou des obstacles (par exemple la vitesse ou la distance d'un obstacle de collision) ou sur le fondement de paramètres de la cinétique de l'objet (par exemple sa vitesse propre, sa décélération maximale possible, l'angle de lacet).

3. Système de décélération selon la revendication 1 ou 3,
**caractérisé en ce que**
l'élément de forme (1) comporte une enveloppe de forme (3), souple, qui se déploie par la pression lorsqu'il est activé.

4. Système de décélération selon la revendication 3,
**caractérisé en ce que**
qu'à l'état non activé, l'enveloppe de forme (3) souple est intégrée dans l'objet (2) notamment dans la carrosserie d'un véhicule.

5. Système de décélération selon la revendication 3 ou 4,
**caractérisé en ce que**
l'enveloppe de forme souple (3) est déployée par un gaz introduit sous pression et par le soufflage défini du gaz commandant la déformation de l'enveloppe (3).

6. Système de décélération selon la revendication 3 ou 4,
**caractérisé en ce que**
l'enveloppe de forme (3) contient un grand nombre d'éléments de pression (5) flexibles, remplis de gaz,
l'enveloppe de forme (3) est enfermée à l'état comprimé avec les éléments de pression (5), à l'état non activé du système dans un réceptacle (4),
pour activer on ouvre le réceptacle (4) de sorte que les éléments de pression (5) se déploient et déploient l'enveloppe de forme (3), et
à la déformation les éléments de pression (5) se compriment et lorsqu'on dépasse un niveau de compression prédéterminé, ces éléments éclatent successivement.

7. Système de décélération selon l'une des revendications précédentes applicables à un véhicule automobile,
**caractérisé en ce que**
un ou plusieurs éléments de forme (1) sont installés sur le côté extérieur du véhicule.

8. Système de décélération selon la revendication 7,
**caractérisé par**
un arceau (6) installé de manière pivotante sur la carrosserie du véhicule (2) comportant une ou plusieurs enveloppes souples (3), et
lorsque le système est activé, l'arceau (6), bascule par-dessus le véhicule (2) et l'enveloppe de forme (3), flexible se déploie sur tout le véhicule.

9. Système de décélération selon l'une des revendications 1 à 6, **caractérisé en ce que**
au moins un élément de forme est placé sur le corps d'une personne notamment d'un motocycliste.
